# EUROPEAN PATENT SPECIFICATION

(11) **EP 2 851 239 B1**
(45) Date of publication and mention of the grant of the patent: **02.01.2019**
(21) Application number: 13185565.2
(22) Date of filing: 23.09.2013
(51) Int. Cl.: B60N 2/70, B60N 2/00

(54) **Cushion mat with pressure sensor**
Stützmatte mit Drucksensor
Nappe de soutien doté d'un capteur de pression

(43) Date of publication of application: 25.03.2015
(73) Proprietor: FICO CABLES LDA, 4470-263 Vermoim-Maia (PT)
(72) Inventor: Da Silva Lopes, Pedro Joao, Paredes (PT); De Castro Faria, Manuel António, Gondar (PT)
(74) Representative: Hess, Peter K. G.

(56) References cited:
- EP-A2- 2 450 228
- JP-U- S49 113 909

## Description

### 1. Field of the invention

The present invention relates to a cushion mat for the integration into an automotive seat. Such cushion mats are generally known in the prior art and are used in the seat and the back rest of a motor vehicle seat and act for the suspension of the cushioning.

### 2. Prior art

Cushioning mats made of metal wires, which carry the cushioning of a seat or of a back rest of a motor vehicle seat, are known in the prior art. Such cushioning mats are usually hinged into a metal seat frame of the motor vehicle seat. Usually, the cushioning mat consists of specially formed metal wires which are connected to each other by appropriate means to provide a suspension and a cushioning effect, respectively. The cushioning behavior of a motor vehicle seat is influenced by the suspension effect of the cushioning mat to a great extent. An example for a cushioning mat having formed metal wires that are connected to each other by plastic links is known from the EP 1593 547 B1.

Further, occupation detection systems in motor vehicle seats are known. Such occupation detection systems are used for example for seat belt reminder systems and for deactivating the passenger airbags if seats are not occupied. Such occupation detection systems are arranged at different locations in the motor vehicle seat. Some of the occupant detection systems comprise pressure sensors that are arranged above the cushioning directly under a seat cover of the seat. Other systems are arranged below the cushioning at the so called "B-Plane" of the seat. Such systems are usually connected to the seat frame of the motor vehicle seat. Examples for occupation detection systems can be found in the WO 98/35861, WO 2005/012849, EP 1 281 942 A1, JP 2001/180353, US 6,360,618 B2, and the US 2004/0159486 A1. Such occupant detection systems have the disadvantage that they require totally different seat constructions, complicated mechanical arrangements or require additional mounting steps for the force sensors at the seat frame.

These problems are solved by a seat cushion mat according to EP 2 374 652 A1 of the applicant. Herein, pressure sensors are mounted at an assembly area of a plastic connector by thermally deforming plastic pins of the assembly area that cooperate with corresponding holes of the pressure sensor to fix the pressure sensor at the plastic connector. This way of fixation has the disadvantage that it needs complex production steps for the fixation of the pressure sensor (e.g. a heating of the plastic pins above the softening temperature, deformation means and cooling means). In addition, this way of mounting leads to an extensive heat input into the temperature-sensitive electronic circuit of the sensor, which possibly has to be separately cooled during the heating in order to avoid any defects of this security-related component of a car.

A further cushion mat with a seat occupation detection is known from EP 2 450 228 A2.

It is, therefore, the problem of the present invention to provide a cushion mat for integration into an automotive seat, wherein its pressure sensor is easier in handling, allows a more cost efficient assembly, and is more maintenance friendly than systems of the prior art. Moreover, it is the problem of the present invention to provide a more reliable cushion mat for integration into an automotive seat, since the reliability is a crucial feature because security relevant functions depend on the sensing of the cushion mat as a part of an occupant detection system.

### 3. Summary of the invention

The above-mentioned problems of solved by a cushion mat according to the invention as defined in independent product claim 1 or independent method claim 9, respectively. Further features or method steps of the invention are disclosed in the dependent claims.

The cushion mat with the assembled sensor module is preferably a part of a seat occupation system in a car, van or the like. These seat occupation systems are preferably used to signalize a passenger to fasten its seat belt while the car is in motion by an audio and/or visual signal. Moreover, these seat occupation systems are advantageous in case of an accident, because they prevent the activation of airbags, belt tensioners and the like for the seats, on which no passenger sits in order to keep the costs for the repair low.

The set of metal wire springs is connected by the plastic connection members, which are realized by polymer injection overmolding of the metal wire springs. The plastic material of the plastic connection members is used in order to provide a stable connection without metallic squeaking. The way of manufacturing, i.e. the polymer injection overmolding, allows to realize all plastic connection members in one single manufacturing step.

The sensor module comprises at least two pressure sensors and a sensor carrier. The sensor carrier is a three-dimensional polymer component which supports the pressure sensors preferably with its electronics and comprises connection members and clamping means, respectively, for the mechanical fixation of the sensor module at the cushion mat. The clamping means preferably provide a frictional and/or a force- and/or a shape-locking connection between the sensor module and the cushion mat. The sensor module provides a snap-in-connection to the cushion mat.

The sensor module may be supplied to the customer as a stand-alone product, wherein the customer carries out the assembly of the sensor module with the cushion mat, or the assembly may be carried out by the sensor-module-manufacturer so that cushion mats with integrated sensor modules are supplied to the customer (e.g. a seat manufacturer or an OEM). The modular design of the sensor module on the one hand and of the cushion mat on the other hand leads to very cost effective systems, since the same kind of sensor module may be assembled in several different cushion mat types.

The mechanical fixation is a non-destructively detachable connection. A non-destructively detachable connection increases the recycling-abilities of the sensor-integrated cushion mat, since the sensor module can be disassembled very easily in a non-destructive manner in that the sensor module may be used as a replacement part or may be recycled separately together with other high-valuable recycling material. Moreover, the non-destructive mechanical fixation allows a replacement of the sensor module without having to replace the entire sensor integrated cushion mat. This helps to decrease repair costs for the replacement of the sensor module significantly.

Preferably, the sensor carrier comprises an integral electrical connector for the electrical connection of sensor module. This electrical connector can be integrally injection-molded together with the sensor carrier. Thus no further wiring or harness of an electrical connector to the sensor module is necessary. Additional mounting steps of a separate electrical connector to the cushion mat are also not necessary. Further the electrical connection of the pressure sensor and the electrical connector can be integrated into the plastic material of the sensor carrier and is thus perfectly protected against mechanical damage and liquids.

The clamping means are snap-in clamps that engage with mounting device receptacles of one of the plastic connection members. It is advantageous in that the plastic connection member is provided with mounting device receptacles, which are preferably adapted to the clamping means of the sensor module in order to provide a more specific and optimized placement and fixation of the sensor module.

Preferably, the clamping means comprise at least one barb, which locks the sensor module in a mounted position. The barb of the sensor module is preferably realized in the form of a triangle, a circle section or an ellipsoid section. The barb engages with the metal wire spring or the mounting device receptacles in order to lock the sensor module in a mounted position. The at least one barb avoids, that the sensor module may slip out of the mounted position in the further manufacturing steps and its subsequent use in the car.

Preferably, the assembly area and the sensor carrier comprise unmount recesses for the unmounting of the sensor module. This is in particular advantageous for providing an optimized maintenance- or recycling-process. The unmount recesses may be entered by an unlock tool, (e.g. a screw driver) in order to move the clamping means, in particular the at least one barb, in a position, where it is possible to disassemble the sensor module.

Preferably, the assembly area comprises a connector cavity for incorporating an electrical connector of the sensor module. This is in particular advantageous when the sensor module is connected to the onboard electronics via a standardized connector. With this it is possible to protect the electrical connectors, both, of the onboard electronics and of the sensor module by housing the connectors in the plastic connection member.

Preferably, the pressure sensors are membrane switches that switch, when the load, which is applied to a membrane switch, exceeds a predetermined value. Such membrane switches are very robust, very cost efficient and in many cases even water resistant and therefore, are particularly suitable for the use in an occupant detection system in a motor vehicle seat. Additionally, they are very thin and have no negative effects on the cushioning behavior of the cushion mat.

Preferably, the metal wire springs comprise fixation means and a support member for the assembly of the cushion mat into a seat frame of an automotive seat. In order to provide a very efficient assembly of the cushion mat into a seat frame of automotive seat, it is preferred that the cushion mat comprises fixation means at its metal wire springs and at its support member for the assembly of the cushion mat into the seat frame. Therefore, the assembly steps in the production line of the customer, e.g. a seat manufacturer in the automotive industry is significantly simplified since the cushion mat may be preferably assembled by clicking in or hanging in without any further assembly steps like gluing, welding etc.

Preferably, the fixation means are plastic over-molded metal wire hooks. The metal wire hooks are used as fixation means for the fixation of the cushion mat into a seat frame of an automotive seat. The fact that the metal wire hooks are plastic overmolded is advantageous in that no contact between metal and metal appears, which would lead to an undesired metallic creaking, when the cushion mat is moved relative to the seat frame.

Particularly, the above mentioned problems are also solved by a method for the production of cushion mats for integration into an automotive seat, comprising the following steps:
a. mounting a pressure sensor on a sensor carrier to form a sensor module;
b. injection molding of plastic material around a set of metal wire springs to form a cushion mat with plastic connection members, wherein the plastic connection members having at least one assembly area, which is realized in the form of a generally plane plastic plate, for the sensor module; and
c. mounting the sensor module by a non-destructively detachable snap-in connection at the generally plane plastic plate of the cushion mat, by snapping-in of clamping means in mounting device receptacles of the generally plane plastic plate.

The skilled person will be aware that the method steps do not necessarily have to be done in the above mentioned order.

### 4. Short description of the drawings

In the following a preferred embodiment of the invention is shown by accompanying figures. Herein shows:
- Fig. 1: a three-dimensional view of a cushion mat of the embodiment according to the invention;
- Fig. 2: a three-dimensional detailed view of a sensor module of the embodiment;
- Fig. 3: a three-dimensional top view of an assembly area of the cushion mat of the first embodiment;
- Fig. 4: the three-dimensional detailed view the sensor module and the assembly area before the assembly of the sensor module of the embodiment; and

- Fig. 5: the three-dimensional detailed view the sensor module and the assembly area after the assembly of the sensor module of the embodiment.

### 5. Detailed description of a preferred embodiment

In the following a preferred embodiment of the present invention is described in detail with respect to the drawings.

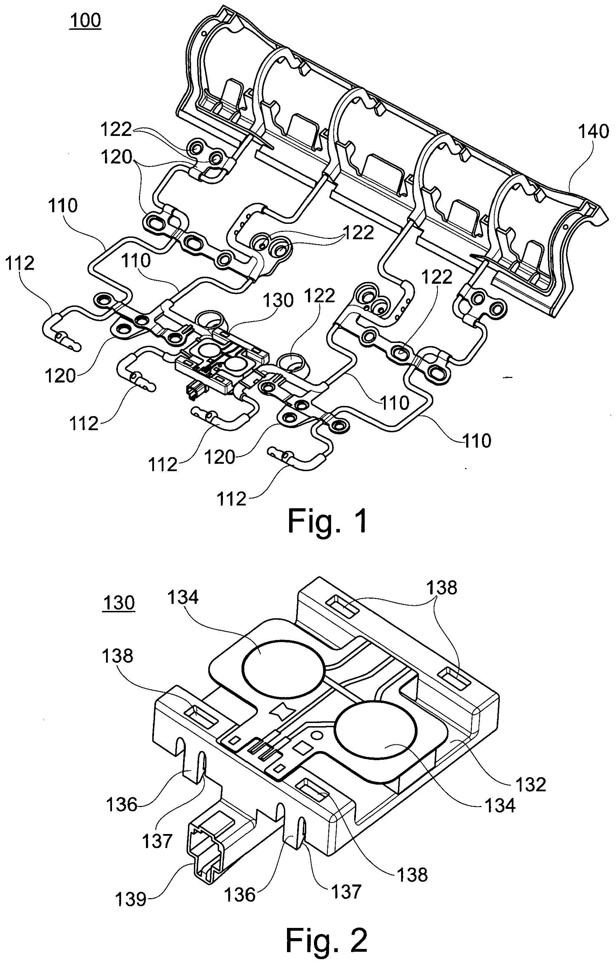

Fig. 1 shows a three-dimensional view of a cushion mat of the embodiment according to the invention. The cushion mat 100, 200 comprises four metal wire springs 110, which are bent in a staggered fashion to provide elasticity. Plastic connection members 120, which are injection overmolded over the set of metal wire springs 110, interconnect the metal wire springs 110 with each other to form the basic structure of the cushion mat 100. As illustrated in Fig. 1, the plastic connection members 110 may have almost any arbitrary shape and are generally designed as flat plastic bands in between the metal wire springs 110. The plastic collection members 120, 220 surround the metal wire springs 110 by tube shaped portions.

The design in the position of the plastic connection members 120 together with the elasticity of the metal wire springs 110 define the support behavior of the cushion mat 100. Therefore, the cushion mats 100 may have different support behaviors at different locations of the cushion mat 100 to increase the sitting comfort.

The cushion mat 100 is preferably arranged in the so called "B-plane" of the seat, i.e. above the cushion mat 100 usually a foam cushioning is arranged that is covered by a cloth or leather cover.

The plastic connection members 120 comprise connection member openings 122 in order to provide several options of fixing the cushion mat to the seat frame.

In Fig. 1, also a sensor module 130 is shown in an assembled state, which is described in more detail below.

Moreover, the cushioning mat 100 comprises fixation means 112 in the form of plastic overmolded metal wire hooks in order to fix the cushion mat at one end to the seat frame. Moreover the cushion mat comprises a support member 140, which preferably connects all metal wire springs 110 with each other in order to provide a general stability of the cushion mat, which allows a simplified handling during the assembly and moreover is used to fix the upper end of the cushion mat 100 to a frame member of the seat frame.

Fig. 2 shows a three-dimensional detailed view of a sensor module 130 of the embodiment. The sensor module 130 comprises a sensor carrier 132 with at least two pressure sensors 134, clamping means 136, unmount recesses 138 and an electrical connector 139. The electrical connector 139 is formed integral with the sensor carrier 132 and forms the receptacle for the electrical connection of the sensor module 130 to the board electronics. Thus no external electrical connector with separate harness is needed.

The pressure sensor 134 is preferably a membrane switch that switches, when a load, which is applied to the membrane switch, exceeds a predetermined value, preferably a weight of 16 kg. When the pressure sensor 134 detects a weight, which exceeds the predetermined value, then an electric signal is generated, which is provided to onboard electronics (not shown) of a car (not shown) via the electrical connector 139. The signal is used for controlling the onboard safety systems of the car, in particular for warning the passenger who has not yet fastened the seat belt, or to deactivate security systems like airbags and belt tensioners and the like for seats, which are not occupied.

For maintenance and/or recycling matters it may be desirable to disassemble the sensor module 130. Therefore, the sensor carrier 132 comprises unmount recesses 138 which may be entered by any unlock tools (e.g. a screwdriver) in order to move the clamping means 136 and the barbs 137 in an unlock position so that the sensor module 130 can be disassembled in a non-destructive manner.

Preferably, the sensor module comprises own data processing means and / or analogue electronic components like capacitors and the like and lines in order to modify the sensor signal in that it may be transferred more easy to the onboard electronics of the car. In particular, it is possible to convert an analogue signal of the pressure sensor 134 into a digital signal by which is then transferred to the onboard electronics. The sensor information may be furthermore integrated into a digital data package in order to be transferred via a digital onboard bus.

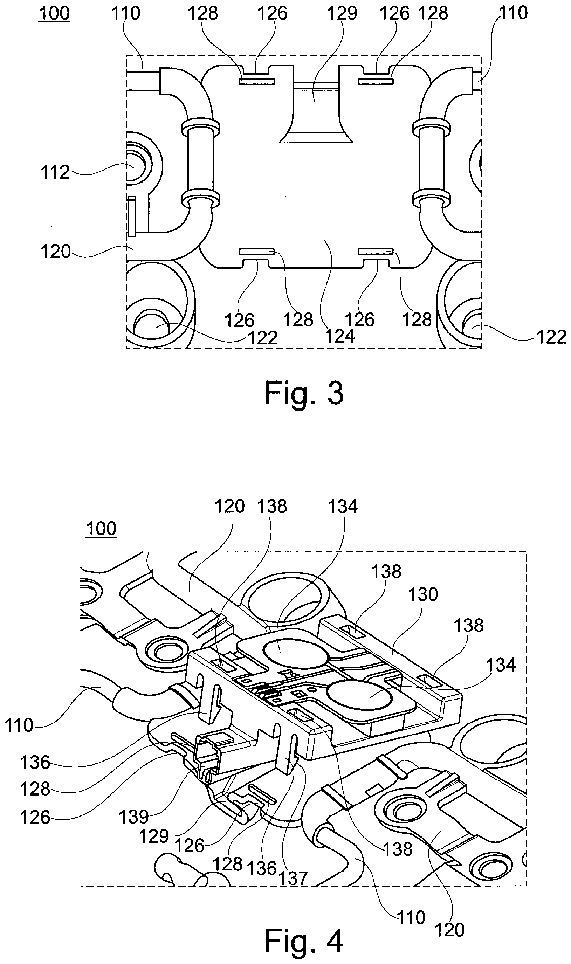

Fig. 3 shows a three-dimensional top view of an assembly area 124 of the cushion mat 100 of the first embodiment. The assembly area 124 is a part of one plastic connection member 120, which connects two metal wire springs 110 with each other. The assembly area 124 is realized in the form of a generally plane plastic plate, which comprises mounting device receptacles 126 and unmount recesses 128 and a connector cavity 129. In the embodiment, the assembly area 124 comprises four mounting device receptacles 126 and four unmount recesses 128. Moreover, the sensor carrier 132 comprises four clamping means 136, each provided with one barb 137 that engages with the mounting device receptacles 126 of the assembly area 124. The unmount recesses 128 of the plastic connection member 120 and the unmount recesses 138 of the sensor module 130 are arranged over each other in that it is possible to insert an unmount tool through both kinds of unmount recesses 128 and 138 in order to be able to move the clamping means 136 of the sensor module 130.

The connector cavity 129 realizes an in general negative form of the electrical connector 139 of the sensor module 130. Thus, the connector cavity 129, which is housed by plastic material on three sides, protects the electrical connector 139 of the sensor module 130 and the electrical connector (not shown) of the onboard electronic system of the car. Preferably, the connector cavity 129 comprises a protection member (not shown), which protects the data- and / or power-cable to be plugged out.

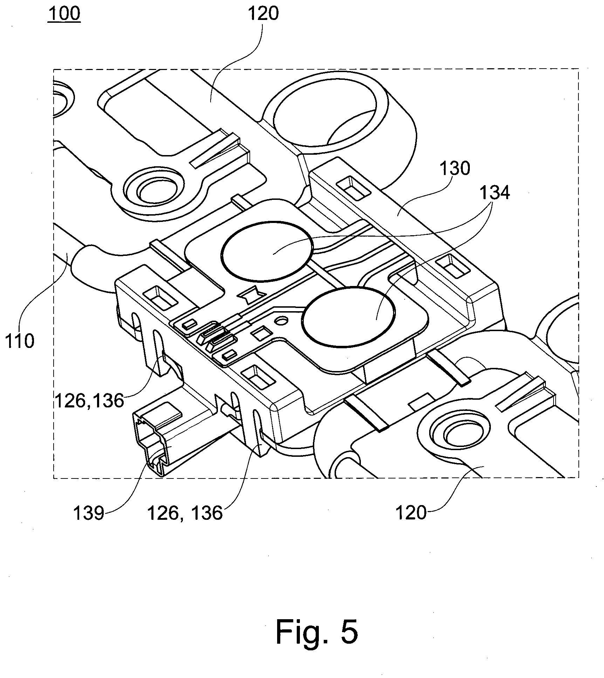

Fig. 4 and Fig. 5 show three-dimensional detailed views of the sensor module and the assembly area before (Fig. 4) and after (Fig. 5) the assembly of the sensor module of the embodiment. The sensor module 130 of the embodiment is snap-in-mounted to the assembly area 124 of one plastic connection members 120. Herein, the mounting device receptacle 126 is realized in the form by u-shaped sections of the assembly area 124. The clamping means 136 with their barbs 137 are located above the application area 124 and on particular above the mounting device receptacles 126. Then, the sensor module 130 is pressed downwards, in that the barbs 137 slide over a surface of the mounting device receptacles 126, wherein the clamping means 136 are bent outwards. When the sensor module 130 is guided further downwards, the barbs 137 of the clamping means 136 pass the mounting device receptacle 126. The clamping means, which have been elastically bent outwards during the assembly, go back to their starting point, wherein the undercuts of the barbs mechanically engage with the mounting device receptacles 126 in order to provide a shape-locking connection between the sensor module 130 and the assembly area 124.

An upper side of the sensor module 130 and upper side of the plastic connection member 120 constitute one common plane in that the sensor module 31 does not protrude the plane surface of the plastic connection member 120.

### List of reference signs

- 100: cushion mat
- 110: metal wire springs
- 112: fixation means
- 120: plastic connection member
- 122: connection member openings
- 124: assembly area
- 126: mounting device receptacle
- 128: unmount recess
- 129: connector cavity
- 130: sensor module
- 132: sensor carrier
- 134: pressure sensor
- 136: clamping means
- 137: barb
- 138: unmount recess
- 139: electrical connector
- 140: support member

## Claims

1. Cushion mat (100) for integration into an automotive seat, comprising:
a. a set of metal wire springs (110);
b. plastic connection members (120), connecting the wire springs (110) with each other to form the cushion mat (100); and
c. at least one sensor module (130) comprising a pressure sensor (134) for providing a seat occupation signal; wherein
d. the at least one sensor module (130) further comprises a sensor carrier (132); and
e. the sensor carrier (132) comprises clamping means (136), for the mechanical fixation of the sensor module (130) at the cushion mat (100);
**characterized in that**
f. said sensor carrier (132), which is a three-dimensional polymer component, supports at least two pressure sensors (134);
g. said plastic connection members (120) comprise at least one assembly area (124), which is realized in the form of a generally plane plastic plate;
h. said clamping means (136) provides a non-destructively detachable snap-in mounting of the sensor carrier (132) to the generally plane plastic plate (124), wherein the clamping means are snap-in clamps (136) that engage with mounting device receptacles (126) of the generally plane plastic plate; and
i. an upper side of the sensor module (130) and an upper side of the plastic connection member (120) constitute a common plane, such that the sensor module (130), comprising the pressure sensor (134), does not protrude the plane surface of the plastic connection member (120).

2. Cushion mat according to claim 1, wherein the sensor carrier (132) comprises an integral electrical connector (139) for the electrical connection of sensor module (130).

3. Cushion mat according to one of the preceding claims, wherein the clamping means (136,) comprise at least one barb (137), which locks the sensor module (130) in a mounted position.

4. Cushion mat according to claim 1, wherein the assembly area (124) and the sensor carrier (132) comprise unmount recesses (128, 138) for the unmounting of the sensor module (130).

5. Cushion mat according to one of the claims 1 or 4, wherein the assembly area (124) comprises a connector cavity (129) for incorporating an electrical connector (139) of the sensor module (130).

6. Cushion mat according to one of the preceding claims, wherein the pressure sensor (134) is a membrane switch that switches when the load applied to the membrane switch exceeds a predetermined value.

7. Cushion mat according one of the preceding claims, wherein the metal wire springs (110) comprise fixation means (112) and a support member (140) for the assembly of the cushion mat (100) into a seat frame of an automotive seat.

8. Cushion mat according to claim 7, wherein the fixation means (112) are plastic over-molded metal wire hooks.

9. Method for the production of cushion mats (100) for integration into a automotive seat, comprising the following steps:
a. mounting at least two pressure sensors (134) on a sensor carrier (132) to form a sensor module (130);
b. injection molding of plastic material around a set of metal wire springs (110) to form a cushion mat (100) with plastic connection members (120), wherein the plastic connection members (120) having at least one assembly area (124), which is realized in the form of a generally plane plastic plate, for the sensor module (130); and
c. mounting the sensor module (130) by a non-destructively detachable snap-in connection at the generally plane plastic plate of the cushion mat (100); by snapping-in of clamping means (136) in mounting device receptacles (126) of the generally plane plastic plate.

10. Method for the production of cushion mats according to claim 9, wherein the clamping means (136), have at least one barb (137), which locks the sensor module (130) in a mounted position.

## Patentansprüche

1. Polstermatte (100) zur Integration in einem Fahrzeugsitz, aufweisend:
a. einen Satz von Metalldrahtfedern (110);
b. Kunststoffverbindungsteile (120), welche die Drahtfedern (110) miteinander verbinden um die Polstermatte (100) zu bilden; und
c. zumindest ein Sensormodul (130) aufweisend einen Drucksensor (134) zum Bereitstellen eines Sitzbelegungssignals; wobei
d. das zumindest eine Sensormodul (130) weiterhin einen Sensorträger (132) aufweist; und
e. der Sensorträger (132) Klemmmittel (136) aufweist zur mechanischen Befestigung des Sensormoduls (130) an der Polstermatte (100); **dadurch gekennzeichnet, dass**
f. der Sensorträger (132), welcher eine dreidimensionale Polymerkomponente ist, zumindest zwei Drucksensoren (134) trägt;
g. die Kunststoffverbindungsteile (120) zumindest einen Montagebereich (124) aufweisen, der in der Form einer allgemein ebenen Kunststoffplatte ausgestaltet ist;
h. die Klemmmittel (136) eine nicht-zerstörbar lösbare Schnappbefestigung des Sensorträgers (132) an der allgemein ebenen Kunststoffplatte (124) bereitstellen, wobei die Klemmmittel Schnappklemmen (136) sind, die mit Befestigungsvorrichtungsaufnahmen (126) der allgemein ebenen Kunststoffplatte eingreifen; und
i. eine Oberseite des Sensormoduls (130) und eine Oberseite des Kunststoffverbindungsteils (120) eine gemeinsame Ebene bilden, so dass das Sensormodul (130), welches den Drucksensor (134) aufweist, nicht aus der ebenen Oberfläche des Kunststoffverbindungsteils (120) hervorsteht.

2. Polstermatte nach Anspruch 1, wobei der Sensorträger (132) einen integrierten elektrischen Verbinder (139) zur elektrischen Verbindung des Sensormoduls (130) aufweist.

3. Polstermatte nach einem der vorhergehenden Ansprüche, wobei die Klemmmittel (136) mindestens einen Widerhaken (137) aufweisen, der das Sensormodul (130) in einer montierten Position verriegelt.

4. Polstermatte nach Anspruch 1, wobei der Montagebereich (124) und der Sensorträger (132) Lösemulden (128, 138) zum Lösen des Sensormoduls (130) aufweisen.

5. Polstermatte nach einem der Ansprüche 1 oder 4, wobei der Montagebereich (124) einen Verbinderhohlraum (129) zum Einbauen eines elektrischen Verbinders (139) des Sensormoduls (130) aufweist.

6. Polstermatte nach einem der vorhergehenden Ansprüche, wobei der Drucksensor (134) ein Membranschalter ist, der schaltet, wenn die auf den Membranschalter aufgebrachte Last einen vorbestimmten Wert überschreitet.

7. Polstermatte nach einem der vorhergehenden Ansprüche, wobei die Metalldrahtfedern (110) Befestigungsmittel (112, 212) und ein Trägerelement (140) für die Montage der Polstermatte (100) in einen Sitzrahmen eines Fahrzeugsitzes aufweisen.

8. Polstermatte nach Anspruch 7, wobei die Befestigungsmittel (112) kunststoff-überspritzte Metalldrahthaken sind.

9. Verfahren zur Herstellung von Polstermatten (100) zur Integration in einen Fahrzeugsitz, aufweisend die folgenden Schritte:
a. Befestigen von zumindest zwei Drucksensoren (134) auf einem Sensorträger (132) um ein Sensormodul (130) zu bilden;
b. Spritzgießen von Kunststoffmaterial um einen Satz von Metalldrahtfedern (110) um eine Polstermatte (100) mit Kunststoffverbindungsteilen (120) zu bilden, wobei die Kunststoffverbindungsteile (120) mindestens ein Montagebereich (124), der in der Form einer allgemein ebenen Kunststoffplatte ausgestaltet ist, für das Sensormodul (130) aufweisen; und
c. Befestigen des Sensormoduls (130) durch eine nicht-zerstörbar lösbare Schnappverbindung an der allgemein ebenen Kunststoffplatte der Polstermatte (100); durch Einschnappen von Klemmmitteln (136) in Befestigungsvorrichtungsaufnahmen (126) der allgemein ebenen Kunststoffplatte.

10. Verfahren zur Herstellung von Polstermatten nach Anspruch 9, wobei die Klemmmittel (136) zumindest einen Widerhaken (137) aufweisen, der das Sensormodul (130) in einer montierten Position verriegelt.

## Revendications

1. Natte de coussin (100) destinée à être intégrée dans un siège automobile, comprenant :
a. un ensemble de ressorts en fil métallique (110) ;
b. des éléments de liaison en plastique (120), reliant entre eux les ressorts en fil (110) pour former la natte de coussin (100) ; et
c. au moins un module détecteur (130) comprenant un détecteur de pression (134) destiné à produire un signal d'occupation du siège ; dans lequel
d. le au moins un module détecteur (130) comprend en outre un support de détecteur (132) ; et
e. le support de détecteur (132) comprend des moyens de pincement (136), pour la fixation mécanique du module détecteur (130) sur la natte de coussin (100) ;
**caractérisée en ce que**
f. ledit support de détecteur (132), qui est un composant en polymère tridimensionnel, supporte au moins deux détecteurs de pression (134) ;
g. lesdits éléments de liaison en plastique comprennent au moins une surface d'assemblage (124), qui est réalisée sous forme d'une plaque en plastique globalement plane ;
h. lesdits moyens de pincement (136) permettent un montage détachable par emboitement non destructif du support de détecteur (132) sur la plaque en plastique globalement plane (124), les moyens de pincement étant des pinces encliquetables (136) qui s'emboîtent sur des réceptacles du dispositif de montage (126) de la plaque en plastique globalement plane ; et
i. un côté supérieur du module détecteur (130) et un côté supérieur de l'élément de liaison en plastique (120) constituent un plan commun, tel que le module détecteur (130), comprenant le détecteur de pression (134), ne fait pas saillie de la surface du plan de l'élément de liaison en plastique (120).

2. Natte de coussin selon la revendication 1, dans laquelle le support de détecteur (132) comprend un connecteur électrique monobloc (139) pour la connexion électrique du module détecteur (130).

3. Natte de coussin selon la revendication précédente, dans laquelle les moyens de pincement (136) comprennent au moins un ardillon (137), qui verrouille le module détecteur (130) en une position montée.

4. Natte de coussin selon la revendication 1, dans laquelle la surface d'assemblage (124) et le support de détecteur (132) comprennent des creux de démontage (128, 138) pour le démontage du module détecteur (130).

5. Natte de coussin selon l'une des revendications 1 ou 4, dans laquelle la surface d'assemblage (124) comprend une cavité de connecteur (129) pour l'incorporation d'un connecteur électrique (139) du module détecteur (130).

6. Natte de coussin selon l'une des revendications précédentes, dans laquelle le détecteur de pression (134) est un commutateur à membrane qui bascule lorsque la charge appliquée au commutateur à membrane dépasse une valeur prédéterminée.

7. Natte de coussin selon l'une des revendications précédentes, dans laquelle les ressorts en fil métallique (110) comprennent des moyens de fixation (112) et un élément support (140) pour l'assemblage de la natte de coussin (100) dans un cadre de siège d'un siège automobile.

8. Natte de coussin selon la revendication 7, dans laquelle les moyens de fixation (112) sont des crochets en fil métallique surmoulés de plastique.

9. Procédé de production de nattes de coussins (100) destinées à être intégrées dans des sièges automobiles, comprenant les étapes suivantes :
a. montage d'au moins deux détecteurs de pression (134) sur un support de détecteur (132) pour former un module détecteur (130) ;
b. moulage par injection d'un matériau plastique autour d'un ensemble de ressorts en fil métallique (110) pour former une natte de coussin (100) avec des éléments de liaison en plastique (120), les éléments de liaison en plastique (120) possédant au moins une surface d'assemblage (124), qui est réalisée sous la forme d'une plaque en plastique globalement plane, pour le module détecteur (130) ; et
c. montage du module détecteur (130) par une liaison non destructive détachable à encliquetage au niveau de la plaque en plastique globalement plane de la natte de coussin (100) par encliquetage de moyens de pincement (136) dans des réceptacles de dispositif de montage (126) de la plaque en plastique globalement plane.

10. Procédé de production de nattes de coussin selon la revendication 9, dans lequel les moyens de pincement (136) possèdent au moins un ardillon (137) qui verrouille le module détecteur en une position montée.
